# EUROPEAN PATENT SPECIFICATION

(11) **EP 2 285 565 B1**
(45) Date of publication and mention of the grant of the patent: **26.06.2013**
(21) Application number: 09755616.1
(22) Date of filing: 13.05.2009
(51) Int. Cl.: B32B 17/10, C03C 17/30, C03C 17/34, C09J 7/02, C03C 27/10

(54) **ADHESIVE TAPE AND LAMINATED GLASS**
KLEBEBAND UND DAMIT BESCHICHTETES GLAS
RUBAN ADHÉSIF ET VERRE FEUILLETÉ

(30) Priority: 27.05.2008 US 56171 P
(43) Date of publication of application: 23.02.2011
(73) Proprietor: Dow Corning Corporation, Midland, Michigan 48686-0994 (US)
(72) Inventor: ZHU, Bizhong, Midland MI 48640 (US); GREER, Nathan, Freeland MI 48623 (US)
(74) Representative: polypatent BGL
(86) International application number: PCT/US2009/043686
(87) International publication number: WO 2009/146254

(56) References cited:
- EP-A- 1 690 839
- EP-A- 1 721 738
- WO-A-2005/115746
- JP-A- 2002 293 585

## Description

### FIELD OF THE INVENTION

The present invention relates to an adhesive tape and more particularly to an adhesive tape comprising a reinforced silicone resin film having a first major surface and a second major surface, a first polysilicate coating on the first major surface of the film, and a second polysilicate coating on the second major surface of the film. The present invention also relates to a laminated glass comprising a first glass sheet, at least one additional glass sheet overlying the first glass sheet, and a composite interlayer between and directly in contact with opposing surfaces of adjacent glass sheets, wherein the interlayer comprises a reinforced silicone resin film having a first major surface and second major surface, a first polysilicate coating on the first major surface of the film, and a second polysilicate coating on the second major surface of the film.

### BACKGROUND OF THE INVENTION

Laminated glass is used in a variety of industrial and consumer applications where high transparency, protection, and safety are of primary importance. For example, laminated glass is widely used in the automotive, electronic, appliance, construction, and aerospace industries.

Laminated glass typically consists of two or more sheets of glass and an adhesive interlayer between adjacent sheets. The interlayer material is commonly a thermoplastic or thermosetting adhesive. Furthermore, the adhesive may be an organic adhesive such as polyvinylbutyral or an inorganic adhesive such as an alkali metal silicate. Compared with laminated glass comprising an organic polymer interlayer, laminated glass comprising an alkali metal silicate interlayer offers the advantages of low flammability and high char yield. Such laminates are disclosed in U.S. Patent No. 3,640,837 to Gaeth et al.; U.S. Patent No. 5,565,273 to Egli et al.; U.S. Patent No. 6,159,606 to Gelderie et al.; Great Britain Patent No. 1,290,699; Japanese Patent Application Publication No. 8067538 A to Motoharu et al.; and Japanese Patent Application Publication No. 7206482 A to Yoshimi et al.

Although laminated glass comprising an alkali metal silicate interlayer has low flammability and high char yield, it typically has low impact resistance compared with laminated glass having an organic polymer interlayer. Consequently, there is a need for a laminated glass having low flammability, high char yield, and high impact resistance.

### SUMMARY OF THE INVENTION

The present invention is directed to an adhesive tape, comprising:
a reinforced silicone resin film having a first major surface and a second major surface;
a first polysilicate coating on the first major surface of the film; and
a second polysilicate coating on the second major surface of the film; wherein the first polysilicate coating and the second polysilicate coating each comprise from 50 to 85% (w/w) of at least one alkali metal polysilicate and from 15 to 50% (w/w) of water, wherein the alkali metal polysilicate has a mole ratio of silica to metal oxide of at least 1.05.

The present invention is also directed to a laminated glass, comprising:
a first glass sheet;
at least one additional glass sheet overlying the first glass sheet; and
a composite interlayer between opposing surfaces of adjacent glass sheets, wherein the interlayer comprises a reinforced silicone resin film having a first major surface and second major surface, a first polysilicate coating on the first major surface of the film, and a second polysilicate coating on the second major surface of the film, wherein the first polysilicate coating and the second polysilicate coating each comprise from 50 to 85% (w/w) of at least one alkali metal polysilicate and from 15 to 50% (w/w) of water, wherein the alkali metal polysilicate has a mole ratio of silica to metal oxide of at least 1.05.

The laminated glass of the present invention has high transparency, high adhesion during and after exposure to temperatures above the decomposition temperature of the adhesive, high heat resistance, low flammability (as evidenced by low heat release rate), and high char yield. Moreover, the laminated glass exhibits high impact resistance compared with a glass laminate having only a polysilicate interlayer.

The adhesive tape of the present invention can be used to bond a variety of materials, including semiconductors such as silicon and gallium arsenide; quartz; aluminum oxide; ceramics; glass; metal foils; and plastics. In particular, the adhesive tape can be used to bond glass sheets in the fabrication of laminated glass.

The laminated glass of the present invention is useful in numerous applications, including fire protection, impact resistance, heat insulation, sound attenuation, solar control, safety, and security. For example, the laminated glass is useful as windshields, windows, and firewalls.

These and other features, aspects, and advantages of the present invention will become better understood with reference to the following description, appended claims, and accompanying drawings.

### BRIEF DESCRIPTION OF THE DRAWINGS

Figure 1 shows a cross-sectional view of one embodiment of a laminated glass according to the present invention.

Figure 2 shows a cross-sectional view of the preceding embodiment of the laminated glass, wherein the composite interlayer further comprises a silicone adhesive coating on the polysilicate coatings.

### DETAILED DESCRIPTION OF THE INVENTION

An adhesive tape according to the present invention comprises:
a reinforced silicone resin film having a first major surface and a second major surface;
a first polysilicate coating on the first major surface of the film; and
a second polysilicate coating on the second major surface of the film; wherein the first polysilicate coating and the second polysilicate coating each comprise from 50 to 85% (w/w) of at least one alkali metal polysilicate and from 15 to 50% (w/w) of water, wherein the alkali metal polysilicate has a mole ratio of silica to metal oxide of at least 1.05.

The adhesive tape comprises a reinforced silicone resin film having a first major surface and a second major surface. As used herein, the terms "first major surface" and "second major surface" refer to the two opposing surfaces of a reinforced silicone resin film that are parallel to the major dimension of the film.

The reinforced silicone resin film typically comprises from 10 to 99% (w/w), alternatively from 30 to 95% (w/w), alternatively from 60 to 95% (w/w), alternatively from 80 to 95% (w/w), of a cured silicone resin. Also, the reinforced silicone resin film typically has a thickness of from 15 to 500 µm, alternatively from 15 to 300 µm, alternatively from 20 to 150 µm, alternatively from 30 to 125 µm.

The reinforced silicone resin film can be any reinforced silicone resin film comprising a fiber reinforcement. Reinforced silicone resin films and methods of preparing the films from various curable silicone compositions are known in the art, as exemplified in the following International Patent Application Publications: WO2006/088645, WO2006088646, WO2007/092032, and WO2007/018756. Examples of fiber reinforcements include, but are not limited to reinforcements comprising glass fibers; quartz fibers; graphite fibers; nylon fibers; polyester fibers; aramid fibers, such as Kevlar® and Nomex®; polyethylene fibers; polypropylene fibers; and silicon carbide fibers.

The reinforced silicone resin film is typically prepared by impregnating a fiber reinforcement (e.g., woven or nonwoven glass fabric, or loose glass fibers) in a curable silicone composition comprising a silicone resin, and curing the silicone resin of the impregnated fiber reinforcement. Examples of curable silicone compositions include, but are not limited to, hydrosilylation-curable silicone compositions, condensation-curable silicone compositions, radiation-curable silicone compositions, and peroxide-curable silicone compositions. The silicone resin can be cured by exposing the composition to ambient temperature, elevated temperature, moisture, or radiation, depending on the type of curable silicone composition used to impregnate the fiber reinforcement.

The adhesive tape comprises a first polysilicate coating on the first major surface of the film. The first polysilicate coating comprises from 50 to 85% (w/w), alternatively from 55 to 80% (w/w), alternatively from 60 to 70% (w/w), of at least one alkali metal polysilicate and from 15 to 50 % (w/w) of water, wherein the alkali metal polysilicate has a mole ratio of silica to metal oxide of at lest 1.05.

Examples of alkali metal polysilicates include, but are not limited to, sodium polysilicate, potassium polysilicate, lithium polysilicate, rubidium polysilicate, and cesium polysilicate. The alkali metal polysilicate can be a single alkali metal polysilicate or a mixture comprising two or more different alkali metal polysilicates.

In one embodiment of the adhesive tape, the alkali metal polysilicate is sodium polysilicate. In another embodiment, the alkali metal polysilicate is potassium polysilicate. In still another embodiment, the alkali metal polysilicate is a mixture of sodium polysilicate and potassium polysilicate.

The alkali metal polysilicate typically has a mole ratio of silica (SiO₂) to metal oxide (M₂O, wherein M is an alkali metal), of from 1.05 to 50, alternatively from 1.2 to 10, alternatively from 2 to 8. When the mole ratio of silica to metal oxide is less than 1.05, the polysilicate coating may have inadequate moisture resistance. When the mole ratio is greater than 50, the polysilicate coating may be too brittle.

The first polysilicate coating comprises from 15 to 50% (w/w), alternatively from 20 to 45% (w/w), alternatively from 30 to 40% (w/w), of water. When the water content of the coating is less than 15%, the coating may be susceptible to cracking. Also, when the water content is greater than 50%, the coating may have inadequate mechanical strength.

The first polysilicate coating can be a single layer coating or a multiple layer coating comprising two or more layers, where directly adjacent layers have a different composition (e.g., alkali metal, SiO₂/M₂O mole ratio, water content). The multiple layer coating typically comprises from 2 to 100 layers, alternatively from 2 to 10 layers, alternatively from 2 to 5, layers.

The single layer polysilicate coating typically has a thickness of from 1 to 15,000 µm, alternatively from 50 to 5,000 µm, alternatively from 1,000 to 3,000 µm. The multiple layer coating typically has a thickness of from 1 to 15,000 µm, alternatively from 50 to 5,000 µm, alternatively 1,000 to 3,000 µm. When the thickness of the first polysilicate coating is less than I µm, the coating may become discontinuous. When the thickness of the coating is greater than 15,000 µm, the coating may exhibit reduced adhesion and/or cracking.

The first polysilicate coating typically has high transparency. The transparency of the coating depends on a number of factors, such as the composition and thickness of the coating. For example, a polysilicate coating having a thickness of 50 µm typically has a percent transmittance of at least 80%, alternatively at least 85%, for light in the visible region (-400 to ∼700 nm) of the electromagnetic spectrum.

The first polysilicate coating can be formed as described below in the method of preparing the adhesive tape of the present invention.

The second polysilicate coating of the adhesive tape is as described and exemplified above for the first polysilicate coating. The first polysilicate coating and the second polysilicate coating may be identical or different. For example, the polysilicate coatings may differ in one or more properties such as composition, thickness, and number of layers.

In one embodiment of the adhesive tape, at least one of the first polysilicate coating and the second polysilicate coating is directly on and in contact with the corresponding major surface of the reinforced silicone resin film.

The adhesive tape can be prepared by forming a first polysilicate coating on a first major surface of a reinforced silicone resin film; forming a second polysilicate coating on a second major surface of the film; wherein the reinforced silicone resin film, the first polysilicate coating, and the second polysilicate coating are as described above for the adhesive tape of the present invention.

A first polysilicate coating is formed on a first major surface of a reinforced silicone resin film. The first polysilicate coating can be formed using a variety of methods. For example, when the first polysilicate coating is a single layer coating, the coating can be formed by (i) applying an aqueous polysilicate composition on a first major surface of a reinforced silicone resin film to form a wet coating, wherein the composition comprises from I to 85% (w/w) of an alkali metal polysilicate and from 15 to 99% (w/w) of water, wherein the alkali metal polysilicate has a mole ratio of silica to metal oxide of at least 1.05; and (ii) drying the wet coating to produce a polysilicate coating comprising from 50 to 85% (w/w) of at least one alkali metal polysilicate and from 15 to 50% (w/w) of water, wherein the metal polysilicate has a mole ratio of silica to metal oxide of at least 1.05.

An aqueous polysilicate composition is applied on a first major surface of a reinforced silicone resin film to form a wet coating, wherein the composition comprises from 1 to 85% (w/w) of an alkali metal polysilicate and from 15 to 99% (w/w) of water, wherein the alkali metal polysilicate has a mole ratio of silica to metal oxide of at least 1.05.

The alkali metal polysilicate of the aqueous polysilicate composition is as described and exemplified above for the polysilicate coating of the adhesive tape. Thus, the alkali metal polysilicate can be a single alkali metal polysilicate or a mixture comprising two or more different alkali metal polysilicates.

The concentration of the alkali metal polysilicate in the aqueous polysilicate composition is typically from 1 to 85% (w/w), alternatively from 40 to 70% (w/w), alternatively from 45 to 65% (w/w), based on the total weight of the composition.

The concentration of water in the aqueous polysilicate composition is typically from 15 to 99% (w/w), alternatively from 20 to 60% (w/w), alternatively from 35 to 55% (w/w), based on the total weight of the composition.

The pH of the aqueous polysilicate composition, which is a function of composition and concentration, is alkaline. For example, the polysilicate composition typically has a pH value of from 9 to 13.5, alternatively from 10 to 13, alternatively from 10 to 12, at room temperature (23 ± 2 °C).

The aqueous polysilicate composition can comprise additional ingredients, provided the ingredient does not prevent the composition form drying to form the polysilicate coating of the adhesive tape, described above. For example the aqueous polysilicate composition can comprise a surfactant, for example, a nonionic surfactant, to facilitate application on the reinforced silicone resin film.

Methods of preparing aqueous polysilicate compositions comprising alkali metal polysilicates are well known in the art; many of these compositions are commercially available. For example, the following aqueous polysilicate solutions are sold by PQ Corporation: N® containing 8.9% (w/w) Na₂O and 28.7% (w/w) SiO₂; N®Clear containing 8.9% (w/w) Na₂O and 28.7% (w/w) SiO₂; N®38 containing 8.2% (w/w) Na₂O and 26.4% (w/w) SiO₂; STIXSO®RR containing 9.2% (w/w) Na₂O and 30.0% (w/w) SiO₂; E® containing 8.6% (w/w) Na₂O and 27.7% (w/w) SiO₂; O® containing 9.1 % (w/w) Na₂O and 29.5% (w/w) SiO₂; KASIL®1 containing 8.3% (w/w) K₂O and 20.8% (w/w) SiO₂; KASIL®6 containing 12.7% (w/w) K₂O and 26.5% (w/w) SiO₂; KASIL® 1.8 containing 14.6% (w/w) K₂O and 26.3% (w/w) SiO₂; KASIL®33 containing 11.6% (w/w) K₂O and 24.4% (w/w) SiO₂; LITHISIL®25 containing 2.5% (w/w) Li₂O and 20.5% SiO₂; and LITHISIL®829 containing 8.2% (w/w) K₂O, 1.0% (w/w) Li₂O, and 20.5% SiO₂.

The aqueous polysilicate composition can be applied on the first major surface of the reinforced silicone resin film using conventional methods such as dip coating, spray coating, flow coating, screen printing, gravure coating, slot die coating, knife over roll coating, and roll coating.

The wet coating is dried to produce a polysilicate coating comprising from 50 to 85% (w/w) of at least one alkali metal polysilicate and from 15 to 50% (w/w) of water, wherein the metal polysilicate has a mole ratio of silica to metal oxide of at least 1.05. The wet coating is typically dried by removing water. This can be accomplished by exposing the wet coating to a temperature of from 15 to 90 °C, alternatively from 15 to 45 °C, alternatively from 20 to 30 °C for an amount of time sufficient to produce a polysilicate coating containing from 15 to 50% (w/w) of water. For example, the wet coating can be dried by heating the coating at a temperature of from 30 to 60 °C for a period of time of from 0.5 to 48 h.

Alternatively, the wet coating can be dried by exposing the coating to a relative humidity of from 0 to 90%, alternatively from 20 to 60%, alternatively from 30 to 55%, at room temperature. For example, the wet coating can typically be dried by exposing it to a relative humidity of from 50 to 60% in a sealed chamber for a period of from 12 to 48 h. The humidity can be controlled using conventional means, such as a commercially available humidity control chamber or a sealed chamber containing saturated aqueous calcium nitrate solution.

A second polysilicate coating is formed on a second major surface of the reinforced silicone resin film. When the second polysilicate coating is a single layer coating, it can be formed as described above in the method of forming the first polysilicate coating, except the second polysilicate coating is formed on the second major surface of the reinforced silicone resin film. Moreover, the first polysilicate coating and the second polysilicate coating can be formed sequentially or simultaneously.

The method of preparing the adhesive tape, wherein the first polysilicate coating and the second polysilicate coatings are each a single layer coating can further comprise repeating the steps (i) and (ii) to increase the thickness of the coating, except the aqueous polysilicate composition is applied on the polysilicate coating rather than the reinforced silicone resin film, and the same polysilicate composition is used for each application.

An adhesive tape comprising a multiple layer polysilicate coating can be prepared in a manner similar to the method used to prepare a single layer coating, only adjacent layers of the coating are prepared using an aqueous polysilicate composition having a different composition and each film is dried before applying the aqueous polysilicate composition of the next layer. For example, an adhesive tape comprising a polysilicate coating having two layers can be prepared by (i) applying an aqueous polysilicate composition, described above, on at least one major surface of a reinforced silicone resin film to form a first wet coating, (ii) drying the first wet coating, (iii) applying an aqueous polysilicate composition different from the composition in (i) on the dried polysilicate coating to form a second wet coating, and (iv) drying the second wet coating.

A laminated glass according to the present invention comprises:
a first glass sheet;
at least one additional glass sheet overlying the first glass sheet; and
a composite interlayer between opposing surfaces of adjacent glass sheets, wherein the interlayer comprises a reinforced silicone resin film having a first major surface and second major surface, a first polysilicate coating on the first major surface of the film, and a second polysilicate coating on the second major surface of the film, wherein the first polysilicate coating and the second polysilicate coating each comprise from 50 to 85% (w/w) of at least one alkali metal polysilicate and from 15 to 50% (w/w) of water, wherein the alkali metal polysilicate has a mole ratio of silica to metal oxide of at least 1.05.

As used herein, the term "overlying" used in reference to the additional glass sheet means each additional glass sheet occupies a position over, but not in direct contact with, the first glass sheet and any intervening glass sheet(s).

The reinforced silicone resin film, the first polysilicate coating, and the second polysilicate coating of the composite interlayer are as described and exemplified above for the adhesive tape of the present invention. The laminated glass comprises a first glass sheet and at least one additional glass sheet. The laminated glass typically contains from I to 50 additional glass sheets, alternatively from I to 20 additional glass sheets, alternatively from I to 10 additional glass sheets.

The glass sheets can have any thickness. For example, the glass sheets can be thin and flexible glass sheets having a thickness of 5 to 1500 micrometers or thick and rigid glass sheets having a thickness of from 0.05 to 0.5 in. The glass sheets in the laminated glass may be identical or different. For example, the glass sheets may differ in thickness or composition.

The glass sheets can comprise any type of glass. Examples of suitable glasses include, but are not limited to, soda-lime glass, borosilicate glass, lead-alkali glass, borate glass, silica glass, alumino-silicate glass, lead-borate glass, sodium borosilicate glass, lithium aluminosilicate glass, Chalcogenide glass, phosphate glass, and alkali-barium silicate glass.

In one embodiment of the laminated glass, the composite interlayer is between and directly in contact with opposing surfaces of adjacent glass sheets.

The composite interlayer of the laminated glass can further comprise a silicone adhesive coating on at least one of the first polysilicate coating and the second polysilicate coating, wherein the silicone adhesive coating comprises a cured product of at least one silicone resin. As used herein, the term "cured product of a silicone resin" refers to a cross-linked silicone resin having a three-dimensional network structure. The silicone adhesive coating can be a single layer coating comprising one layer of a cured product of a silicone resin, or a multiple layer coating comprising two or more layers of at least two different cured products of silicone resins, where directly adjacent layers comprise different cured products (i.e., cured products have a different composition and/or property). The multiple layer coating typically comprises from 2 to 7 layers, alternatively from 2 to 5 layers, alternatively from 2 to 3 layers.

The single layer silicone adhesive coating typically has a thickness of from 0.03 to 300 µm, alternatively from 0.1 to 100 µm, alternatively from 0.1 to 50 µm. The multiple layer coating typically has a thickness of from 0.06 to 300 µm, alternatively from 0.2 to 100 µm, alternatively 0.2 to 50 µm. When the thickness of the silicone adhesive coating is less than 0.03 µm, the coating may become discontinuous. When the thickness of the silicone adhesive coating is greater than 300 µm, the coating may exhibit reduced adhesion and/or cracking.

In one embodiment of the laminated glass, the silicone adhesive coating is on and in direct contact with at least one of the first polysilicate coating and the second polysilicate coating of the reinforced silicone resin film.

The silicone resin, methods of preparing the resin, and methods of preparing the silicone adhesive coating are described below in the method of preparing the laminated glass.

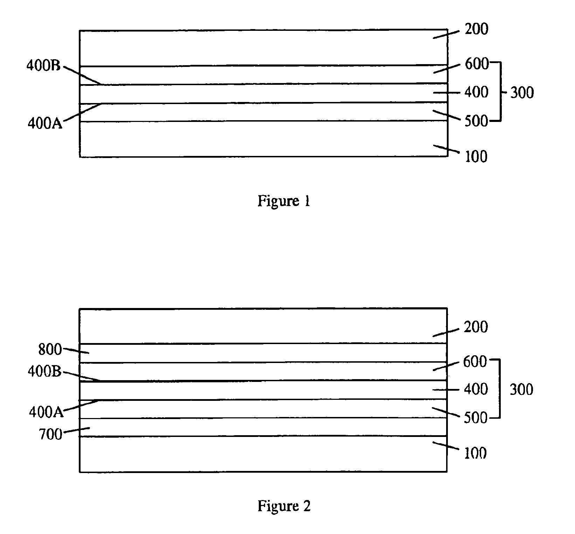

As shown in Figure 1, one embodiment of a laminated glass according to the present invention comprises a first glass sheet **100;** a second glass sheet **200** overlying the first glass sheet **100;** and a composite interlayer **300** between opposing surfaces of adjacent glass sheets, wherein the interlayer comprises a reinforced silicone resin film **400** having a first major surface **400A** and a second major surface **400B,** a first polysilicate coating **500** on the first major surface **400A** of the film, and a second polysilicate coating **600** on the second major surface **400B** of the film, wherein the first polysilicate coating **500** and the second polysilicate coating **600** each comprise from 50 to 85% (w/w) of at least one alkali metal polysilicate and from 15 to 50% (w/w) of water, wherein the metal polysilicate has a mole ratio of silica to metal oxide of at least 1.05.

As shown in Figure 2, the preceding embodiment of the laminated glass can further comprise a first silicone adhesive coating **700** on the first polysilicate coating **500** and a second silicone adhesive coating **800** on the second polysilicate coating **600,** wherein the first silicone adhesive coating **700** and the second silicone adhesive coating **800** each comprise a cured product of at least one silicone resin.

Suitable methods of preparing the laminated glass of the present invention are illustrated here for the embodiments depicted in Figures 1 and 2. The laminated glass depicted in Figure 1 can be prepared using numerous methods. For example, the laminated glass can be prepared by (i) forming a first polysilicate on a first glass sheet; (ii) forming a second polysilicate coating on a second glass sheet; (iii) placing a first major surface of a reinforced silicone resin film, described above, on the first polysilicate coating, (iv) placing the second polysilicate coating on a second major surface of the reinforced silicone resin film to form an assembly, and (v) heating the assembly under pressure.

The first polysilicate coating and the second polysilicate coating can be formed on the first glass sheet and the second glass sheet, respectively, as described above for the first and the second polysilicate coatings formed on the reinforced silicone resin film of the adhesive tape.

The assembly is typically heated at a temperature of from room temperature 40 to 200 °C, alternatively from 50 to 100 °C, alternatively from 50 to 80 °C. Moreover, the assembly is typically heated under a pressure of from 1 x 10³ to 1 x 10⁷ Pa, alternatively from 1 x 10⁴ to 1 x 10⁶ Pa, alternatively from I x 10⁴ to 1 x 10⁵ Pa. The heating time, which depends on temperature and pressure, is typically from 0.1 to 24 h, alternatively from 0.5 to 12 h, alternatively from 0.5 to 6 h. For example, an assembly heated at a temperature of from 50 to 60 °C and pressure of 1 x 10⁵ Pa is typically heated for a period of from 2 to 4 h.

The laminated glass depicted in Figure 2 can be prepared by (i) forming a first polysilicate coating on a first glass sheet; (ii) forming a second polysilicate coating on a second glass sheet; (iii) applying a curable silicone composition comprising a silicone resin, described below, on the first polysilicate coating to form a first silicone adhesive film, (iv) placing a first major surface of a reinforced silicone resin film, described above, on the first silicone adhesive film, (v) applying a curable silicone composition comprising a silicone resin, described below, on a second major surface of the reinforced silicone resin film to form a second silicone adhesive film, (vi) placing the second polysilicate coating on the second silicone adhesive film to form an assembly, and (vii) curing the silicone resin of the first silicone adhesive film and the second silicone adhesive film. When the laminated glass comprises at least one multiple layer silicone adhesive coating, typically each layer of the coating is at least partially cured before the next layer is formed.

The curable silicone composition can be any curable silicone composition comprising at least one silicone resin. Curable silicone compositions and methods for their preparation are well known in the art. Examples of curable silicone compositions include, but are not limited to, hydrosilylation-curable silicone compositions, condensation-curable silicone compositions, radiation-curable silicone compositions, and peroxide-curable silicone compositions.

The silicone resin of the curable silicone composition can contain T siloxane units, T and Q siloxane units, or T and/or Q siloxane units in combination with M and/or D siloxane units. For example, the silicone resin can be a T resin, a TQ resin, an MT resin, a DT resin, an MDT resin, an MQ resin, a DQ resin, an MDQ resin, an MTQ resin, a DTQ resin, or an MDTQ resin.

The silicone resin typically contains silicon-bonded reactive groups capable of reacting in the presence or absence of a catalyst to form a cured product of the silicone resin. Examples of silicon-bonded reactive groups include, but are not limited to, -H, alkenyl, alkynyl, -OH, a hydrolysable group, alkenyl ether, acryloyloxyalkyl, substituted acryloyloxyalkyl, and an epoxy-substituted organic group.

The silicone resin typically has a weight-average molecular weight (M_{w}) of from 500 to 1,000,000, alternatively from 1,000 to 100,000, alternatively from 1,000 to 50,000, alternatively from 1,000 to 20,000, alternatively form 1,000 to 10,000, where the molecular weight is determined by gel permeation chromatography employing a refractive index detector and polystyrene standards.

A hydrosilylation-curable silicone composition typically comprises a silicone resin having an average of at least two silicon-bonded alkenyl groups or silicon-bonded hydrogen atoms per molecule; an organosilicon compound in an amount sufficient to cure the silicone resin, wherein the organosilicon compound has an average of at least two silicon-bonded hydrogen atoms or silicon-bonded alkenyl groups per molecule capable of reacting with the silicon-bonded alkenyl groups or silicon-bonded hydrogen atoms in the silicone resin; and a catalytic amount of a hydrosilylation catalyst.

A condensation-curable silicone composition typically comprises a silicone resin having an average of at least two silicon-bonded hydrogen atoms, hydroxy groups, or hydrolysable groups per molecule and, optionally, a cross-linking agent having silicon-bonded hydrolysable groups and/or a condensation catalyst.

A radiation-curable silicone composition typically comprises a silicone resin having an average of at least two silicon-bonded radiation-sensitive groups per molecule and, optionally, a cationic or free-radical photoinitiator depending on the nature of the radiation-sensitive groups in the silicone resin.

A peroxide-curable silicone composition typically comprises a silicone resin having silicon-bonded unsaturated aliphatic hydrocarbon groups and an organic peroxide.

The silicone composition can be applied on the first polysilicate coating and the second major surface of the reinforced silicone resin film using conventional methods such as dip coating, spray coating, flow coating, screen printing, and roll coating. When present, the solvent is typically allowed to evaporate from the silicone adhesive film. Any suitable means for evaporation may be used such as simple air drying, applying a vacuum, or heating (up to 50 °C).

The silicone resin of the first silicone adhesive film and the second silicone adhesive film can be cured by exposing the silicone adhesive film to ambient temperature, elevated temperature, moisture, or radiation, depending on the type of curable silicone composition used to form the film.

When the curable silicone composition is a hydrosilylation-curable silicone composition, the silicone resin can be cured by exposing the silicone adhesive film to a temperature of from room temperature (∼23 ± 2 °C) to 250 °C, alternatively from room temperature to 200 °C, alternatively from room temperature to 150 °C, at atmospheric pressure. The silicone adhesive film is generally heated for a length of time sufficient to cure (cross-link) the silicone resin. For example, the film is typically heated at a temperature of from 150 to 200 °C for a time of from 0.1 to 3 h.

When the curable silicone composition is a condensation-curable silicone composition, the conditions for curing the silicone resin depend on the nature of the silicon-bonded groups in the resin. For example, when the silicone resin contains silicon-bonded hydroxy groups, the silicone resin can be cured (i.e., cross-linked) by heating the silicone adhesive film. The silicone resin can typically be cured by heating the silicone adhesive film at a temperature of from 50 to 250 °C, for a period of from 1 to 50 h. When the condensation-curable silicone composition comprises a condensation catalyst, the silicone resin can typically be cured at a lower temperature, e.g., from room temperature (-23 ± 2 °C) to 200 °C.

When the curable silicone composition is a condensation-curable silicone composition comprising a silicone resin having silicon-bonded hydrogen atoms, the silicone resin can be cured by exposing the silicone adhesive film to moisture or oxygen at a temperature of from 100 to 450 °C for a period of from 0.1 to 20 h. When the condensation-curable silicone composition contains a condensation catalyst, the silicone resin can typically be cured at a lower temperature, e.g., from room temperature (-23 ± 2 °C) to 400 °C.

Further, when the curable silicone composition is a condensation-curable silicone composition comprising a silicone resin having silicon-bonded hydrolysable groups, the silicone resin can be cured by exposing the silicone adhesive film to moisture at a temperature of from room temperature (-23 ± 2 °C) to 250 °C, alternatively from 100 to 200 °C, for a period of from 1 to 100 h. For example, the silicone resin can typically be cured by exposing the silicone adhesive film to a relative humidity of 30% at a temperature of from about room temperature (∼23 ± 2 °C) to 150 °C, for a period of from 0.5 to 72 h. Cure can be accelerated by application of heat, exposure to high humidity, and/or addition of a condensation catalyst to the composition.

When the curable silicone composition is a radiation-curable silicone composition, the silicone resin can be cured by exposing the silicone adhesive film to an electron beam. Typically, the accelerating voltage is from about 0.1 to 100 keV, the vacuum is from about 10 to 10-3 Pa, the electron current is from about 0.0001 to 1 ampere, and the power varies from about 0.1 watt to 1 kilowatt. The dose is typically from about 100 microcoulomb/cm² to 100 coulomb/cm², alternatively from about 1 to 10 coulombs/cm². Depending on the voltage, the time of exposure is typically from about 10 seconds to 1 hour.

Also, when the radiation-curable silicone composition further comprises a cationic or free radical photoinitiator, the silicone resin can be cured by exposing the silicone adhesive film to radiation having a wavelength of from 150 to 800 nm, alternatively from 200 to 400 nm, at a dosage sufficient to cure (cross-link) the silicone resin. The light source is typically a medium pressure mercury-arc lamp. The dose of radiation is typically from 30 to 1,000 mJ/cm², alternatively from 50 to 500 mJ/cm². Moreover, the silicone adhesive film can be externally heated during or after exposure to radiation to enhance the rate and/or extent of cure.

When the curable silicone composition is a peroxide-curable silicone composition, the silicone resin can be cured by exposing the silicone adhesive film to a temperature of from room temperature (∼23 ± 2 °C) to 180 °C, for a period of from 0.05 to 1 h.

The method of preparing the laminated glass depicted in Figure 2 can further comprise compressing the assembly before or during the step of curing the silicone resin to remove excess composition and/or entrapped air, and to reduce the thickness of the laminated glass. The assembly can be compressed using conventional equipment such as a stainless steel roller, hydraulic press, rubber roller, or laminating roll set. The assembly is typically compressed at a pressure of from 1,000 Pa to 10 MPa.

Alternatively, the laminated glass shown in Figure 2 can be prepared by (i) forming a first polysilicate coating on a first glass sheet; (ii) forming a second polysilicate coating on a second glass sheet; (iii) applying a curable silicone composition comprising a silicone resin, described above, on the first polysilicate coating to form a first silicone adhesive film, (iv) impregnating a fiber reinforcement in the first silicone adhesive film; (v) placing the second polysilicate coating on the impregnated fiber reinforcement; and (vi) curing the silicone resin of the impregnated fiber reinforcement.

The laminated glass of the present invention has high transparency, typically at least 80% for visible light, high adhesion during and after exposure to temperatures above the decomposition temperature of the adhesive, high heat resistance, low flammability (as evidenced by low heat release rate), and high char yield. Moreover, the laminated glass exhibits high impact resistance compared with a glass laminate having only a polysilicate interlayer.

The adhesive tape of the present invention can be used to bond a variety of materials, including semiconductors such as silicon and gallium arsenide; quartz; aluminum oxide; ceramics; glass; metal foils; and plastics. In particular, the adhesive tape can be used to bond glass sheets in the fabrication of laminated glass.

The laminated glass of the present invention is useful in numerous applications, including fire protection, impact resistance, heat insulation, sound attenuation, solar control, safety, and security. For example, the laminated glass is useful as windshields, windows, and firewalls.

### EXAMPLES

The following examples are presented to better illustrate the laminated substrate of the present invention, but are not to be considered as limiting the invention, which is delineated in the appended claims. Unless otherwise noted, all parts and percentages reported in the examples are by weight. The following materials were employed in the examples:

Silicone Composition A: a mixture containing 82% of a silicone resin having the formula (PhSiO_{3/2})_{0.75}(ViMe₂SiO_{1/2})_{0.25}, where the resin has a weight-average molecular weight of about 1700, a number-average molecular weight of about 1440, and contains about 1 mol% of silicon-bonded hydroxy groups; 18% of 1,4-bis(dimethylsilyl)benzene; and Platinum Catalyst, described below, in an amount sufficient to provide 10 ppm platinum, based on the total weight of the composition. The mole ratio of silicon-bonded hydrogen atoms in the 1,4-bis(dimethylsilyl)benzene to silicon-bonded vinyl groups in the silicone resin is 1.1:1, as determined by ²⁹SiNMR and ¹³CNMR.

Silicone Composition B: a mixture containing 72.4% of a silicone resin having the formula (PhSiO_{3/2})_{0.75}(ViMe₂SiO_{1/2})_{0.25}, where the resin has a weight-average molecular weight of about 1700, a number-average molecular weight of about 1440, and contains about 1 mol% of silicon-bonded hydroxy groups; 27.6% of 1,1,5,5-tetramethyl-3,3-diphenyltrisiloxane; and Platinum Catalyst, described below, in an amount sufficient to provide 10 ppm platinum, based on the total weight of the composition. The mole ratio of silicon-bonded hydrogen atoms in the 1,1,5,5-tetramethyl-3,3-diphenyltrisiloxane to silicon-bonded vinyl groups in the silicone resin is 1.1:1, as determined by ²⁹SiNMR and ¹³CNMR.

Silicone Composition C: a mixture containing 48.3% of a silicone resin having the formula (ViMe₂SiO_{2/2})_{0.05}(SiO_{4/2})_{0.55}(Me₃SiO_{1/2})_{0.4}, where the resin has a weight-average molecular weight of about 21,400; 21.0% of a dimethylvinylsiloxy-terminated polydimethylsiloxane containing about 0.17% (w/w) of dimethylvinylsiloxy units; 0.7% of dicumyl peroxide; and 30.0% of xylene.

Melinex® 516, sold by Dupont Teijin Films (Hopewell, VA), is a polyethylene-terephthalate (PET) film pretreated on one side with a release agent for slip and having a thickness of 125 µm.

Glass Fabric is a heat-treated glass fabric prepared by heating style 106 electrical glass fabric having a plain weave and a thickness of 37.5 µm at 575 °C for 6 h. The untreated glass fabric was obtained from JPS Glass (Slater, SC).

Platinum Catalyst is a platinum catalyst containing 1000 ppm of platinum. The catalyst was prepared by treating a platinum(0) complex of 1,1,3,3-tetramethyldisiloxane in the presence of a large molar excess of 1,1,3,3-tetramethyldisiloxane, with triphenylphosphine to achieve a mole ratio of triphenylphosphine to platinum of about 4:1.

STIXSO®RR, sold by PQ Corporation (Valley Forge, PA), is an aqueous sodium silicate solution containing 9.2% Na₂O and 30.0% SiO₂ (weight ratio SiO₂:Na₂O = 3.25), and has a density of 1.41 g/cm³ and a viscosity of 830 cps.

### Example 1

The reinforced silicone resin films of Examples 4, 5, and 6 were prepared according to the following procedure: Silicone Composition A was applied on the release agent-treated surface of a Melinex® 516 PET film (8 in. x 11 in.) to form a silicone film. Glass Fabric having the same dimensions as the PET film was carefully laid down on the silicone film, allowing sufficient time for the composition to thoroughly wet the fabric. The aforementioned silicone composition was then uniformly applied to the embedded fabric. An identical PET film was placed on top of the coating with the release agent-treated side in contact with the silicone composition. The laminate was heated in an oven at 150 °C for 30 min. The oven was turned off and the laminate was allowed to cool to room temperature inside the oven. The upper PET film was separated (peeled away) from the reinforced silicone resin film, and the silicone resin film was then separated from the lower PET film. The transparent reinforced silicone resin film had a thickness of about 0.003-0.004 in.

Silicone Composition B was uniformly applied to both sides of the reinforced silicone resin film. The coated reinforced silicone resin film was placed between two PET film (8 in. x 11 in.) with the release agent-treated sides of the PET films in contact with the silicone coatings. The assembly was passed between two stainless steel bars separated by a distance of 0.023 in. and then heated in an air circulating oven at 80 °C for 25 min.

### Example 2

Flat float glass plates (6 in. x 6 in. x 1/8 in.) were washed with a warm solution of detergent in water, thoroughly rinsed with deionized water, and dried in air. An edge dam was constructed around the perimeter of each glass plates using masking tape. Approximately 45 mL of STIXSO®RR sodium silicate solution was applied on one side of each glass plate. The coated glass plates were kept in a sealed glass chamber containing saturated calcium nitrate solution and having a relative humidity of 51 % for a period of 76 h. The polysilicate coating on each glass plate had a water content of from 32 to 35% (w/w).

### Example 3

Two of the sodium polysilicate-coated glass plates prepared of Example 2 were removed from the humidity chamber. The reinforced silicone resin film of Example 1 having the same dimensions as the glass plates was placed on the coated surface of one of the glass plates, and the coated surface of the other glass plate was then placed on the exposed surface of the reinforced silicone resin film. An 8-lb steel block was placed on the composite, which was then heated in an oven at a rate of 5 °C/min. to 130 °C. The composite was maintained at this temperature for 1 h. The oven was turned off and the laminated glass was allowed to cool to room temperature inside the oven.

### Example 4

Two of the sodium polysilicate-coated glass plates prepared of Example 2 were removed from the humidity chamber. Approximately 10 g of Silicone Composition B was uniformly applied on the polysilicate-coated side of each glass plate using a coating bar. The glass plates were heated in an oven at 80 °C for 10 min. The reinforced silicone resin film of Example 1 having the same dimensions as the glass plates was placed on the coated surface of one of the glass plates, and the coated surface of the other glass plate was then placed on the exposed surface of the reinforced silicone resin film. An 8-lb steel block was placed on the composite, which was then heated in an oven at a rate of 5 °C/min. to 130 °C. The composite was maintained at this temperature for 1 h. The oven was turned off and the laminated glass was allowed to cool to room temperature inside the oven.

### Example 5

Silicone composition C was cast on a Melinex® 516 PET film and dried at a temperature of 120 °C in an air circulating oven for 10 min. to produce a silicone adhesive sheet having a thickness of about 0.006 in.

Two of the sodium polysilicate-coated glass plates prepared of Example 2 were removed from the humidity chamber. A section of the silicone resin adhesive film having the same dimensions as the glass plates was placed on the coated surface of one of the glass plates. Glass Fabric having the same dimensions as the adhesive film was carefully laid down on the film. A second section of the silicone resin adhesive film having the same dimensions as the glass plates was uniformly applied over the glass fabric, and the coated surface of the other glass plate was then placed on the exposed surface of the silicone resin adhesive film. An 8-lb steel block was placed on the composite, which was then heated in an oven at a rate of 5 °C/min. to 130 °C. The composite was maintained at this temperature for 1 h. The oven was turned off and the laminated glass was allowed to cool to room temperature inside the oven.

## Claims

1. An adhesive tape, comprising:
- a reinforced silicone resin film having a first major surface and a second major surface;
- a first polysilicate coating on the first major surface of the film; and
- a second polysilicate coating on the second major surface of the film;
wherein the first polysilicate coating and the second polysilicate coating each comprise from 50 to 85% (w/w) of at least one alkali metal polysilicate and from 15 to 50% (w/w) of water, wherein the alkali metal polysilicate has a mole ratio of silica to metal oxide of at least 1.05.

2. The adhesive tape according to claim 1, wherein the reinforcement of the reinforced silicone resin film comprises a fiber reinforcement comprising glass fibers.

3. The adhesive tape according to claim 1, wherein the alkali metal polysilicate is selected from sodium polysilicate, potassium polysilicate, and lithium polysilicate, preferably sodium polysilicate or wherein the alkali metal polysilicate has a mole ratio of silica to metal oxide of from 1.05 to 50.

4. The adhesive tape according to claim 1, wherein the first polysilicate coating and the second polysilicate coating each comprise from 20 to 45% (w/w) of water.

5. The adhesive tape according to claim 1, wherein at least one of the first polysilicate coating and the second polysilicate coating is a single layer coating or a multiple layer coating, the single layer coating or the multiple layer coating preferably having a thickness of from 1 to 15,000 µm.

6. The adhesive tape according to claim 1, wherein at least one of the first polysilicate coating and the second polysilicate coating is directly on and in contact with the corresponding major surface of the reinforced silicone resin film.

7. A laminated glass, comprising:
- a first glass sheet;
- at least one additional glass sheet overlying the first glass sheet; and
- a composite interlayer between opposing surfaces of adjacent glass sheets, wherein the interlayer comprises a reinforced silicone resin film having a first major surface and second major surface, a first polysilicate coating on the first major surface of the film, and a second polysilicate coating on the second major surface of the film, wherein the first polysilicate coating and the second polysilicate coating each comprise from 50 to 85% (w/w) of at least one alkali metal polysilicate and from 15 to 50% (w/w) of water, wherein the alkali metal polysilicate has a mole ratio of silica to metal oxide of at least 1.05.

8. The laminated glass according to claim 7, wherein the laminated glass contains from 1 to 50 additional glass sheets.

9. The laminated glass according to claim 7, wherein, the composite interlayer is between and directly in contact with opposing surfaces of adjacent glass sheets.

10. The laminated glass according to claim 7, wherein at least one of the first polysilicate coating and the second polysilicate coating is a single layer coating or a multiple layer coating, the single layer coating or the multiple layer coating preferably having a thickness of from 1 to 15,000 µm.

11. The laminated glass according to claim 7, wherein the composite interlayer further comprises a silicone adhesive coating on at least one of the first polysilicate coating and the second polysilicate coating, wherein the silicone adhesive coating is a cured product of at least one silicone resin.

12. The laminated glass according to claim 11, wherein the silicone adhesive coating is a single layer coating, preferably having a thickness of from 0.03 to 300 µm or wherein the silicone adhesive coating is a multiple layer coating, preferably comprising from 2 to 5 layers or preferably the multiple layer coating having a thickness of from 0.06 to 300 µm.

13. The laminated glass according to claim 11, wherein the silicone adhesive coating is on and in direct contact with at least one of the first polysilicate coating and the second polysilicate coating of the reinforced silicone resin film.

## Patentansprüche

1. Klebeband enthaltend:
- einen verstärkten Siliconharzfilm mit einer ersten Hauptoberfläche und einer zweiten Hauptoberfläche,
- eine erste Polysilicatbeschichtung auf der ersten Hauptoberfläche des Films und
- eine zweite Polysilicatbeschichtung auf der zweiten Hauptoberfläche des Films,
wobei die erste Polysilicatbeschichtung und die zweite Polysilicatbeschichtung jeweils 50 bis 85% (w/w) wenigstens eines Alkalimetallpolysilicats und 15 bis 50% (w/w) Wasser enthalten, wobei das Alkalimetallpolysilicat ein Molverhältnis von Siliciumdioxid zu Metalloxid von wenigstens 1,05 aufweist.

2. Klebeband gemäß Anspruch 1, wobei die Verstärkung des verstärkten Siliconharzfilms eine Faserverstärkung aufweist, die Glasfasern enthält.

3. Klebeband gemäß Anspruch 1, wobei das Alkalimetallpolysilicat ausgewählt ist aus Natriumpolysilicat, Kaliumpolysilicat und Lithiumpolysilicat, vorzugsweise Natriumpolysilicat, oder wobei das Alkalimetallpolysilicat ein Molverhältnis von Siliciumdioxid zu Metalloxid von 1,05 bis 50 aufweist.

4. Klebeband gemäß Anspruch 1, wobei die erste Polysilicatbeschichtung und die zweite Polysilicatbeschichtung jeweils 20 bis 45% (w/w) Wasser enthalten.

5. Klebeband gemäß Anspruch 1, wobei wenigstens eine der ersten Polysilicatbeschichtung und der zweiten Polysilicatbeschichtung eine Einschichtbeschichtung oder eine Mehrfachschichtbeschichtung ist, wobei die Einschichtbeschichtung oder die Mehrfachschichtbeschichtung vorzugsweise eine Dicke von 1 bis 15.000 µm aufweist.

6. Klebeband gemäß Anspruch 1, wobei wenigstens eine der ersten Polysilicatbeschichtung und der zweiten Polysilicatbeschichtung sich unmittelbar auf und in Kontakt mit der korrespondierenden Hauptoberfläche des verstärkten Siliconharzfilms befindet.

7. Laminiertes Glas enthaltend:
- eine erste Glasscheibe,
- wenigstens eine zusätzliche Glasscheibe, die über der ersten Glasscheibe liegt, und
- eine Kompositzwischenschicht zwischen gegenüberliegenden Oberflächen von benachbarten Glasscheiben, wobei die Zwischenschicht einen verstärkten Siliconharzfilm mit einer ersten Hauptoberfläche und einer zweiten Hauptoberfläche, einer ersten Polysilicatbeschichtung auf der ersten Hauptoberfläche des Films und einer zweiten Polysilicatbeschichtung auf der zweiten Hauptoberfläche des Films beinhaltet, wobei die erste Polysilicatbeschichtung und die zweite Polysilicatbeschichtung jeweils 50 bis 85% (w/w) wenigstens eines Alkalimetallpolysilicats und 15 bis 50% (w/w) Wasser enthalten, wobei das Alkalimetallpolysilicat ein Molverhältnis von Siliciumdioxid zu Metalloxid von wenigstens 1,05 aufweist.

8. Laminiertes Glas gemäß Anspruch 7, wobei das laminierte Glas 1 bis 50 zusätzliche Glasscheiben enthält.

9. Laminiertes Glas gemäß Anspruch 7, wobei die Kompositzwischenschicht zwischen und in direktem Kontakt mit gegenüberliegenden Oberflächen benachbarter Glasscheiben angeordnet ist.

10. Laminiertes Glas gemäß Anspruch 7, wobei wenigstens eine der ersten Polysilicatbeschichtung und der zweiten Polysilicatbeschichtung eine Einschichtbeschichtung oder eine Mehrfachschichtbeschichtung ist, wobei die Einschichtbeschichtung oder die Mehrfachschichtbeschichtung vorzugsweise eine Dicke von 1 bis 15.000 µm aufweist.

11. Laminiertes Glas gemäß Anspruch 7, wobei die Kompositzwischenschicht zusätzlich eine Siliconkleberbeschichtung auf wenigstens einer der ersten Polysilicatbeschichtung und der zweiten Polysilicatbeschichtung aufweist, wobei die Siliconkleberbeschichtung ein gehärtetes Produkt wenigstens eines Siliconharzes ist.

12. Laminiertes Glas gemäß Anspruch 11, wobei die Siliconkleberbeschichtung eine Einschichtbeschichtung ist, vorzugsweise mit einer Dicke von 0,03 bis 300 µm oder wobei die Siliconkleberbeschichtung eine Mehrfachschichtbeschichtung ist, die vorzugsweise 2 bis 5 Schichten aufweist, oder die Mehrfachschichtbeschichtung vorzugsweise eine Dicke von 0,06 bis 300 µm aufweist.

13. Laminiertes Glas gemäß Anspruch 11, wobei die Siliconkleberbeschichtung auf und in direktem Kontakt mit wenigstens einer der ersten Polysilicatbeschichtung und der zweiten Polysilicatbeschichtung des verstärkten Siliconharzfilms angeordnet ist.

## Revendications

1. Bande adhésive comprenant :
- un film de résine de silicone renforcé présentant une première surface principale et une seconde surface principale ;
- un premier revêtement de polysilicate sur la première surface principale du film ; et
- un second revêtement de polysilicate sur la seconde surface principale du film ;
dans laquelle le premier revêtement de polysilicate et le second revêtement de polysilicate comprennent chacun de 50 à 85 % (masse/masse) d'au moins un poly(silicate de métal alcalin) et de 15 à 50 % (masse/masse) d'eau, dans laquelle le poly(silicate de métal alcalin) présente un rapport molaire de la silice à l'oxyde de métal d'au moins 1,05.

2. Bande adhésive selon la revendication 1, dans laquelle le renforcement du film de résine de silicone renforcé comprend un renforcement de fibres comprenant des fibres de verre.

3. Bande adhésive selon la revendication 1, dans laquelle le poly(silicate de métal alcalin) est choisi parmi le poly(silicate de sodium), le poly(silicate de potassium), et le poly(silicate de lithium), de préférence le poly(silicate de sodium) ou dans laquelle le poly(silicate de métal alcalin) présente un rapport molaire de la silice à l'oxyde de métal de 1,05 à 50.

4. Bande adhésive selon la revendication 1, dans laquelle le premier revêtement de polysilicate et le second revêtement de polysilicate comprennent chacun de 20 à 45 % (masse/masse) d'eau.

5. Bande adhésive selon la revendication 1, dans laquelle au moins un du premier revêtement de polysilicate et du second revêtement de polysilicate est un revêtement monocouche ou un revêtement multicouche, le revêtement monocouche ou le revêtement multicouche ayant de préférence une épaisseur de 1 à 15 000 µm.

6. Bande adhésive selon la revendication 1, dans laquelle au moins un du premier revêtement de polysilicate et du second revêtement de polysilicate est directement sur et en contact avec la surface principale correspondante du film de résine de silicone renforcé.

7. Verre feuilleté, comprenant :
- une première plaque de verre ;
- au moins une plaque de verre supplémentaire se trouvant sur la première plaque de verre ; et
- une couche intermédiaire composite entre les surfaces opposées des plaques de verre adjacentes, dans lequel la couche intermédiaire comprend un film de résine de silicone renforcé présentant une première surface principale et une seconde surface principale, un premier revêtement de polysilicate sur la première surface principale du film, et un second revêtement de polysilicate sur la seconde surface principale du film, dans lequel le premier revêtement de polysilicate et le second revêtement de polysilicate comprennent chacun de 50 à 85 % (masse/masse) d'au moins un poly(silicate de métal alcalin) et de 15 à 50 % (masse/masse) d'eau, dans lequel le poly(silicate de métal alcalin) présente un rapport molaire de la silice à l'oxyde de métal d'au moins 1,05.

8. Verre feuilleté selon la revendication 7, dans lequel le verre feuilleté contient de 1 à 50 plaques de verre supplémentaires.

9. Verre feuilleté selon la revendication 7, dans lequel la couche intermédiaire composite est entre et directement en contact avec les surfaces opposées des plaques de verre adjacentes.

10. Verre feuilleté selon la revendication 7, dans lequel au moins un du premier revêtement de polysilicate et du second revêtement de polysilicate est un revêtement monocouche ou un revêtement multicouche, le revêtement monocouche ou le revêtement multicouche ayant de préférence une épaisseur de 1 à 15 000 µm.

11. Verre feuilleté selon la revendication 7, dans lequel la couche intermédiaire composite comprend de plus un revêtement adhésif de silicone sur au moins un du premier revêtement de polysilicate et du second revêtement de polysilicate, dans lequel le revêtement adhésif de silicone est un produit durci d'au moins une résine de silicone.

12. Verre feuilleté selon la revendication 11, dans lequel le revêtement adhésif de silicone est un revêtement monocouche, ayant de préférence une épaisseur de 0,03 à 300 µm ou dans lequel le revêtement adhésif de silicone est un revêtement multicouche, comprenant de préférence de 2 à 5 couches ou de préférence le revêtement multicouche ayant une épaisseur de 0,06 à 300 µm.

13. Verre feuilleté selon la revendication 11, dans lequel le revêtement adhésif de silicone se trouve sur et en contact direct avec au moins un du premier revêtement de polysilicate et du second revêtement de polysilicate du film de résine de silicone renforcé.
